**Europäisches Patentamt**

**European Patent Office**

**Office européen des brevets**

(19)

(11) Veröffentlichungsnummer: **0 069 851**

**A1**

(12) # EUROPÄISCHE PATENTANMELDUNG

(21) Anmeldenummer: 82104620.8

(22) Anmeldetag: 27.05.82

(51) Int. Cl.³: **A 61 J 3/06**
**B 65 G 53/64**

(30) Priorität: 11.07.81 DE 3127481

(43) Veröffentlichungstag der Anmeldung:
19.01.83 Patentblatt 83/3

(84) Benannte Vertragsstaaten:
IT

(71) Anmelder: BOEHRINGER MANNHEIM GMBH
Sandhofer Strasse 112-132 Postfach 31 01 20
D-6800 Mannheim 31-Waldhof(DE)

(72) Erfinder: Preis, Walter
Daimlerstrasse 2
D-6840 Lampertheim(DE)

(72) Erfinder: Wachtel, Hans-Josef
Krumbacher Strasse 62
D-6149 Fürth/Odw.(DE)

(72) Erfinder: Demmer, Fritz, Dr.rer.nat.
Kastanienweg 21
D-6945 Hirschberg-Leutershausen(DE)

(72) Erfinder: Groppenbächer, Gregor, Dr.rer.nat.
Blumenstrasse 5
D-6805 Heddesheim(DE)

(54) Vorrichtung zum Entleeren von Dragierkesseln und zum Nachtrocknen und Zwischenlagern von Dragees.

(57) Die Vorrichtung weist auf:

einen Behälter (20) mit einem unterdruckfesten luftdicht verschließbaren Gehäuse (21, 24), in dem sich ein trichterförmiges Sieb (26) dergestalt erstreckt, daß es den Behälter in eine obere Kammer (28) und in eine untere Kammer (30) teilt, einen unterdruckfesten Ansaugrüssel (22), dessen Anschlußstutzen (38) im Bereich der oberen Kammer (28) liegt,

einen Anschluß (40) für eine Unterdruckquelle, durch die der nur durch den Ansaugrüssel (22) mit dem Außenraum verbundene Behälter (20) mit Unterdruck beaufschlagt werden kann, um Dragees aus dem Dragierkessel durch den Rüssel (22) in die obere Kammer anzusaugen,

ein Gebläse (52), durch das zur Trocknung der Dragees Luft mit einem Überdruck in die im übrigen abgedichtete untere Kammer (30) einblasbar ist, der ausreicht, um die in der oberen Kammer (28) befindlichen Dragees zu durchdringen und aus der geöffneten oberen Kammer (28) auszutreten und

eine luftdicht verschließbare Entnahmeöffnung (62) für die Dragees, die mit dem Trichterzentrum des trichterförmigen Siebes in Verbindung steht.

Fig. 1

EP 0 069 851 A1

BOEHRINGER MANNHEIM GMBH                    2416

Vorrichtung zum Entleeren von Dragierkesseln und zum
Nachtrocknen und Zwischenlagern von Dragees

Die vorliegende Erfindung betrifft eine Vorrichtung
zum Entleeren von Dragierkesseln und zum Nachtrocknen
und Zwischenlagern von Dragees.

Dragees, insbesondere für medizinische Zwecke,
werden allgemein in Dragierkesseln hergestellt, in
denen die Tablettenrohlinge so lange mit einer Dragiermasse beschichtet werden, bis die gewünschte Drageeform
erreicht ist. Danach müssen die Dragees aus den Dragierkesseln entnommen, in geeigneter Form nachgetrocknet und
zwischengelagert werden, bis sie.der weiteren Verarbeitung (Bedruckung und Verpackung) zugeführt werden können.
Diese an sich einfachen Zwischenschritte erfordern einen
erheblichen Aufwand an Arbeitskraft. Auch der Raumbedarf zur Trocknung und Zwischenlagerung der Dragees ist
unerwünscht groß.

- 1a -

Mit dem Begriff "Dragees" werden im folgenden sämtliche Arten überzogener Formlinge bezeichnet, wie beispielsweise Zuckerdragees, Filmdragees oder die sogenannten Pellets, die keine ovale, sondern eine runde Form haben, aber ähnliche Fördereigenschaften aufweisen, wie die üblichen Dragees im engeren Sinne In der angelsächsischen Literatur wird häufig der Ausdruck "coated tabletts" für derartige Produkte verwendet. Allgemein eignet sich die Erfindung nicht nur für Arzneimittel und für die Süßwarenherstellung, sondern für alle Produkte, die ähnliche Fördereigenschaften wie medizinische Dragees aufweisen und die nach einem der erfindungsgemäßen Vorrichtung vorgeschalteten Behandlungsschritt der entsprechenden Bearbeitungsvorrichtung entommen, nachgetrocknet und zwischengelagert werden müssen.

Gewöhnlich werden die Dragees von Hand mit Eimern aus den Dragierkesseln entnommen, auf Trockenhorden in dünner Schicht ausgebreitet und zur Entfernung der Restfeuchte in einem trockenen Raum oder Trockenschrank gelagert, so daß sie in entsprechende Behälter abgefüllt und zwischengelagert werden können.

Es hat auch nicht an Versuchen gefehlt, diesen Prozeß zu mechanisieren. So wurden komplizierte Rutschen vorgeschlagen, die in den Dragierkessel eingeführt werden können, um während der Rotation des Dragierkessels die Dragees zu entnehmen. Zum Trocknen sind Gebläsetrockner bekannt, in denen die Dragees auf einem horizontalen, siebförmigen Boden ruhen und von Trocknungsluft durchblasen werden.

Dadurch wird zwar die aufwendige Hordentrocknung vermieden, jedoch sind auch bei Verwendung der Gebläsetrockner arbeitsaufwendige Umfüllvorgänge notwendig.

Aufgabe der vorliegenden Erfindung ist es daher, eine Vorrichtung zur Verfügung zu stellen, durch die bei geringem Raum- und Investitionsbedarf eine erhebliche Arbeitsersparnis bei den eingangs genannten drei Verfahrensschritten der Drageeherstellung erreicht wird.

Diese Aufgabe wird bei einer Vorrichtung der eingangs näher bezeichneten Art gelöst durch die im kennzeichnenden Teil des Anspruchs 1 wiedergegebenen Merkmale.

Die erfindungsgemäße Vorrichtung zeichnet sich insbesondere durch zwei wesentliche Vorteile gegenüber dem Stand der Technik aus. Einerseits ermöglicht sie eine schnelle und gleichzeitig schonende Förderung der Dragees aus dem Dragierkessel in den nachgeordneten Behälter. Andererseits erlaubt sie in einem einzigen, bevorzugt fahrbar ausgebildeten Gerät die Durchführung der drei Funktionen: Entleeren, Nachtrocknen und Zwischenlagern. Für die schnelle und schonende Förderung der Dragees ist wesentlich, daß der Behälter in seiner Gesamtheit soweit luftdicht ist, daß er zum Ansaugen der Dragees im wesentlichen nur durch den Ansaugrüssel mit dem Außenraum verbunden ist. Der Rüssel wird dann in die Dragees in dem Dragierkessel tief eingetaucht, so daß beim Anlegen eines Unterdrucks die Dragees wie eine aus festen Teilchen bestehende Flüssigkeit in ihrer Gesamtheit durch den Rüssel angesaugt werden. Dies ist im Gegensatz zu sehen zu den bekannten pneumatischen Förderern für Feststoffteilchen, bei denen ein schneller Luftstrom erzeugt wird, in welchem die Teilchen, mit relativ weitem Abstand voneinander, aufgrund der Mitnahmewirkung der schnellen Luftströmung befördert werden. Um dieses zu ermöglichen, haben die bekannten

pneumatischen Förderer eine Nebenluftöffnung zum Beispiel am Ende ihres Ansaugrüssels. Die Transportgeschwindigkeit des geförderten Produkts liegt bei der pneumatischen Förderung bei ca. lo m/sec., wobei für den Transport von 1 kg Produkt ca. 1 kg Luft benötigt wird.

Die bekannte pneumatische Förderung läßt sich auch für den Transport von Dragees einsetzen. Sie ist jedoch für das Entleeren der Dragierkessel praktisch nicht geeignet, weil die maximale Förderkapazität der bekannten Einrichtungen für diesen Zweck in der Praxis zu gering ist. Die vorliegende Erfindung hat nun erkannt, daß eine sehr schnelle Förderung (in einem praktischen Beispiel erfordert sie nur 2 Min. für 260 kg Dragees) erreicht wird, indem man die Dragees mit Unterdruck wie eine Flüssigkeit ansaugt, so daß sie als eng aneinanderliegende "Wurst" in den Behälter transportiert werden. Für die Konstruktion des Behälters bedeutet dies, daß er soweit vakuumfest und dicht sein muß, daß sich darin, einschließlich des Rüssels, mit Hilfe einer geeigneten Unterdruckquelle ein Unterdruck erzeugen läßt, der um etwa o,1 bar bis o,3 bar unter Atmosphärendruck liegt. In diesem Sinne sind die Begriffe unterdruckfest und luftdicht zu verstehen.

Die Verwendung des gleichen Behälters zum Nachtrocknen und Zwischenlagern der Dragees wird dadurch ermöglicht, daß der Behälter durch ein trichterförmiges, das heißt mit geneigten Wänden versehenes Sieb in zwei Kammern geteilt ist, von denen die obere, der Aufnahme der Dragees dienende Kammer ein Volumen hat, das größer ist als der maximale Inhalt eines Dragierkessels. Weiter ist zu diesem Zweck ein Gebläse vorgesehen, durch das die Kammer unterhalb des trichterförmigen Siebes (untere Kammer) mit einem solchen Überdruck beaufschlagt werden kann, daß die Luft die Dragees durchdringt und diese dabei von der Restfeuchte befreit. Bevorzugt wird zu diesem Zweck einfach Raumluft verwendet, die durch einen an dem Behälter

angebrachten Filter strömt.

Zur Entnahme der Dragees aus dem Behälter nach der Zwischenlagerung (beziehungsweise gegebenenfalls unmittelbar nach der Nachtrocknung) ist eine Entnahmeöffnung vorgesehen, die unterhalb des Trichterzentrums des trichterförmigen Siebes angeordnet und für die vorhergehenden Arbeitsgänge luftdicht verschließbar ist. Durch die Neigung der Siebwände gelangen die Dragees aufgrund der Schwerkraft zu der Öffnung und können von dort in bekannter Weise, beispielsweise unter Verwendung einer bekannten pneumatischen Förderung in die Bedruckungsmaschine oder unmittelbar in die Verpackungsmaschine transportiert werden.

Für die erfindungsgemäße Förderung der Dragees aus dem Dragierkessel in den Behälter ist es wesentlich, daß die Förderhöhe der Dragees beim Ansaugen nicht zu groß ist. Die maximale Höhe, bei der das erfindungsgemäße Prinzip verwendet werden kann, hängt von den Gegebenheiten des Einzelfalls, insbesondere von der Unterdruckquelle, dem Schlauchdurchmesser und der Dimensionierung und Dichte der Dragees ab. Sie läßt sich im Einzelfall empirisch bestimmen.

Um einen unnötigen Energieverbrauch zu vermeiden, ist es jedoch sinnvoll, die maximale mögliche Förderhöhe nicht auszunutzen, sondern den Ansaugrüssel und den Anschlußstutzen, mit dem dieser mit dem Behälter verbunden wird, gemäß einer bevorzugten Ausführungsform der Erfindung so zu dimensionieren und anzuordnen, daß die Förderhöhe der Dragees beim Ansaugen nur wenig größer ist, als die minimal notwendige Förderhöhe

- 5 -

die sich aus der Differenz zwischen Dragierkesselboden und Unterkante der Dragierkesselöffnung ergibt.
Es ist dabei zu bedenken, daß mit zunehmender Förderhöhe
nicht nur der notwendige Unterdruck und damit der Energieaufwand ansteigt, sondern auch die Geschwindigkeit des
Transports der Dragees zunimmt. Dies kann schließlich
zu einer Beschädigung der Dragees führen, insbesondere
beim Absaugen der letzten im Dragierkessel befindlichen
Dragees. Hierbei wird nämlich relativ viel Luft durch die
Rüsselöffnung mit angesaugt, so daß sich, ähnlich wie bei
einer konventionellen pneumatischen Förderung, eine
schnelle Luftströmung ergibt, die die Dragees stark beschleunigt und mitreißt.

Als besonders vorteilhaft für eine schonende, energiesparende und schnelle Beförderung der Dragees hat sich
eine Ausführungsform erwiesen, bei der der Anschlußstutzen für den Ansaugrüssel in einer solchen Höhe an
dem Behälter angebracht ist, daß er sich unter den praktischen
Bedingungen des betreffenden Herstellungsbetriebes etwa
in der Höhe der Dragierkesselöffnung befindet. Zweckmäßig
verläuft dabei der Stutzen horizontal und seine Innenfläche geht auf der Innenseite des Behälters glatt in
eine entsprechend geformte Einlauffläche für die Dragees
über, die der Umlenkung der Dragees nach unten dient.
Zur zusätzlichen Schonung der Dragees, kann die Einlauffläche mit einem Polstermaterial, beispielsweise einem
Lederbelag versehen sein. Selbstverständlich sollte der
Ansaugrüssel nicht länger sein, als für die Verbindung
des erfindungsgemäßen Behälters mit dem Boden des Dragierkessels notwendig ist.

Eine weitere bevorzugte Ausführungsform zeichnet sich dadurch aus, daß der Anschlußstutzen des Ansaugbehälters sich an einem von dem übrigen Behälter abnehmbaren Ansaugdeckel befindet. Dies ist insbesondere für eine
gute Trocknung der Dragees vorteilhaft. Bei Verwendung dieser Ausführungsform wird nämlich zum
Nachtrocknen der Ansaugdeckel in seiner Gesamtheit
von dem Behälter abgenommen, so daß die Trocknungsluft leicht und ungehindert, nachdem sie die Dragees
durchdrungen hat, abfließen kann. Um eine Verunreinigung
der Dragees während dieses Prozesses zu vermeiden, kann
ein zusätzlicher Trocknungsdeckel aufgelegt werden, der
als feinporiges Sieb oder Gewebe ausgeführt ist.

Die Erfindung wird im Folgenden anhand eines in der
Zeichnung dargestellten Ausführungsbeispiels näher erläutert.

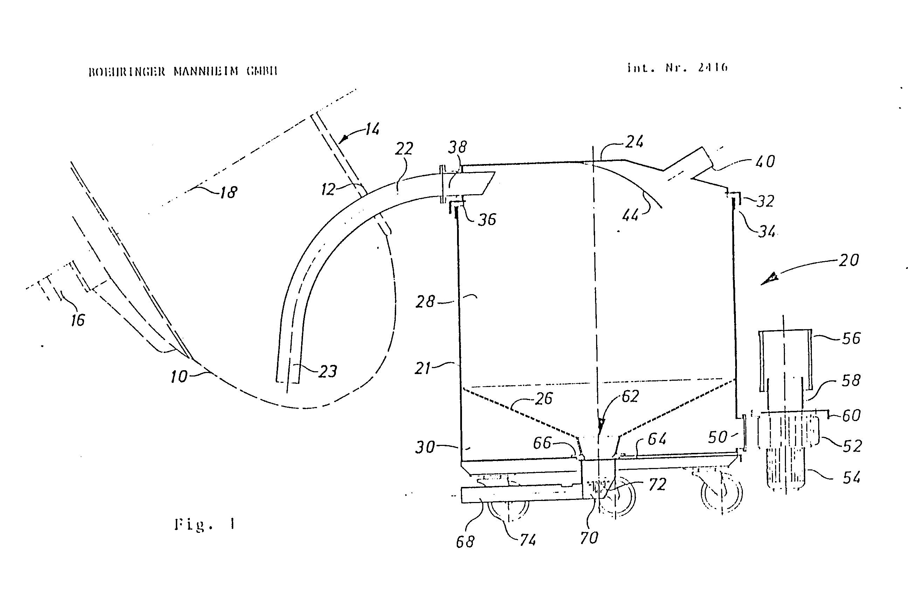

Figur 1 zeigt eine schematische Seitenansicht, teilweise im Schnitt eines erfindungsgemäßen Behälters in
seiner Betriebsposition beim Entleeren eines Dragierkessels.

Der Dragierkessel 1o ist auf der linken Seite der
Figur 1 in strichpunktierten Linien schematisch dargestellt. Man erkennt den Kesselrand 12 , der die Öffnung
14 des Dragierkessels 1o umgibt. Der Dragierkessel 1o
wird durch einen Antrieb 16 um die in der Zeichenebene
liegende Achse 18 gedreht.

Zum Entleeren wird der Dragierkessel 10 angehalten und
der in seiner Gesamtheit mit dem Bezugszeichen 2o versehene Behälter, der zum Entleeren, zum Nachtrocknen und
zum Zwischenlagern der Dragees geeignet ist, wird dicht vo

den Dragierkessel 1o geschoben, wobei der beweglich ausgebildete Ansaugrüssel 22 in der dargestellten Art und Weise in den Dragierkessel 1o eingeführt wird.

Der Behälter 2o hat ein Gehäuse 21 , das in dem in der Figur dargestellten Zustand mit einem Ansaugdeckel 24 verschlossen ist.

Der Behälter 2o ist durch einen Siebboden 26 in eine obere Kammer 28 und in eine untere Kammer 3o unterteilt. Der Siebboden 26 weist Löcher auf, deren Größe so bemessen ist, daß die Dragees nicht hindurchfallen können, andererseits aber Luft leicht aus der unteren Kammer 3o in die obere Kammer 28 eindringen kann.

Der Ansaugdeckel 24 sitzt mit einer Dichtkante 32 auf dem Rand 34 des Gehäuses 21. Dazwischen ist eine Deckeldichtung 36 vorgesehen, durch die der Ansaugdeckel 24 luftdicht gegen das Gehäuse 21 abgedichtet ist. Zum Anschluß des Ansaugrüssels 22 hat der Ansaugdeckel 24 einen Anschlußstutzen 38. Außerdem kann man an den Ansaugdeckel 24 über einen weiteren Anschlußstutzen 4o eine Unterdruckquelle beliebiger Art an den Behälter 2o anschließen, durch die der Innenraum des Behälters mit einem Unterdruck beaufschlagt werden kann, der bevorzugt um o,1 bar bis o,3 bar unter Atmosphärendruck liegt. Geeignet ist beispielsweise ein hinreichend dimensionierter Industriestaubsauger als Unterdruckquelle. Der Anschlußstutzen 4o ist mit der oberen Kammer 28 des Behälters 2o verbunden.

Auf der Innenseite des Ansaugdeckels 24 ist eine Einlauffläche 44 vorgesehen, die so geformt ist, daß die aus dem

Ansaugrüssel 22 austretenden Dragees, soweit sie insbesondere in der Endphase des Ansaugvorgangs eine verhältnismäßig hohe Transportgeschwindigkeit haben, unter einem spitzen Winkel auf die Einlauffläche auftreffen. Zusätzlich kann die Einlauffläche 44 gegebenenfalls mit einem nicht dargestellten dämpfenden Belag versehen sein.

An die untere Kammer 3o ist über einen Anschlußstutzen 5o ein Gebläse 52 angeschlossen, das von einem Gebläsemotor 54 getrieben wird. Dieses Gebläse saugt Raumluft über einen Filter 56 und einen Ansaugstutzen 58 aus der Umgebung des Behälters 2o an. Der Ansaugkanal des Gebläses ist durch einen Schieber 6o luftdicht verschließbar.

Der Siebboden 26 ist, wie aus der Zeichnung ersichtlich, trichterförmig ausgebildet, wobei die Neigung des Trichter so bemessen ist, daß die Dragees aufgrund ihrer Schwerkraf in das Zentrum des Trichters rutschen, an dem sich eine Entnahmeöffnung 62 für die Dragees befindet. Die Entnahmeöffnung 62 ist mit einem Schieber 64 luftdicht verschließbar. Über eine Abdichtung 66 ist sie mit einem Entleerungsrohr 68 verbunden, über das die Dragees aus dem Behälter entnommen werden. In der dargestellten Ausführungsform weist das Entleerungsrohr 68 in seinem Eingangsbereich 7o Nebenluftöffnungen 72 auf, die notwendig sind, wenn die Dragees mittels einer pneumatischen

0069851

Förderung aus dem Behälter entnommen werden sollen.

Der Behälter 2o steht auf Lenkrädern 74 und ist dadurch auch im gefüllten Zustand leicht von einer Person zu dem Dragierkessel und nach der Entnahme der Dragees aus dem Dragierkessel zu der Weiterverarbeitungsstation zu bewegen.

Der erfindungsgemäße Behälter 2o dient, wie erwähnt, dem Entleeren, Nachtrocknen und Zwischenlagern von Dragees. Für den Entleervorgang wird der Behälter in der in der Figur dargestellten Art mit dem Ansaugdeckel mit angeschlossenem Rüssel versehen, wobei der Ansaugrüssel 22 in den Kessel eingeführt wird und zwar dergestalt, daß sein Ende 23 tief in die Dragees in dem Dragierkessel 1o eintaucht. Danach werden die Schieber 6o und 64 geschlossen, so daß der gesamte Behälter in dem eingangs definierten Sinne luftdicht verschlossen ist. Nun wird die mit dem Anschlußstutzen 4o verbundene Unterdruckquelle in Betrieb gesetzt. Sobald sich ein hinreichender Unterdruck in dem Behälter aufgebaut hat, werden die Dragees in ihrer Gesamtheit angesaugt, wobei sich das durch die erfindungsgemäße Vorrichtung ermöglichte Verfahren besonders dadurch auszeichnet, daß die Dragees im Gegensatz zu der bekannten pneumatischen Förderung mit einem vergleichsweise geringen Unterdruck ähnlich wie eine Flüssigkeit als zusammenhängende "Wurst" durch den Rüssel 22 transportiert werden.

In einem praktischen Ausführungsbeispiel war ein Kessel mit einer Füllung von 26o kg Dragees zu entleeren. Das Gewicht eines Dragees betrug 5oo mg, der Durchmesser eines Dragees 11 mm. Mit einem erfindungsgemäßen Behälter, der einen Ansaugrüssel von 7o mm Durchmesser aufwies, war es dabei möglich, den gesamten Kesselinhalt in zwei Minuten zu entleeren, so daß sich eine Förderleistung von 13o kg/min. ergibt. Die notwendige Förderhöhe zwischen dem Boden des Dragierkessels 1o und der höchsten Stelle des Transportweges der Dragees betrug in diesem Beispiel ca. 7o cm. Der Behälter war, wie auch in der Figur dargestellt, vorteilhafterweise so aufgebaut, daß die praktisch notwendige Förderhöhe nur wenig größer war, als die Mindestförderhöhe, die sich durch die Abmessungen des Dragierkessels 1o ergibt, nämlich durch den vertikalen Abstand zwischen dem Boden des Dragierkessels 1o und der Unterkante der Öffnung 14. Der Unterdruck in dem Behälter während des Fördervorgangs lag bei 0,06 bar unter Normaldruck.

Gegen Ende des Entleerungsvorgangs befinden sich nur noch wenige Dragees in dem Dragierkessel 1o. In diesem Fall tritt ein Zustand ein, bei dem verhältnismäßig viel Luft mit verhältnismäßig wenig Dragees angesaugt wird. Nun werden die Dragees nicht mehr, wie zuvor, primär durch die Druckdifferenz zwischen Behälterinnenraum und der äußeren Atmosphäre angesaugt, die mit ihrem Eigengewicht im Gleichgewicht steht, sondern sie werden von schnellströmender Luft mitgerissen, wie dies für eine pneumatische Föderung typisch ist. Es ist für die vorliegende Erfindung aber sehr wesentlich, daß auf diese Weise, die einen verhältnismäßig hohen Energieaufwand erfordert und, wie bereits zuvor erwähnt, keine hinreichende Förderleistung erbringen kann, nur noch ein geringer Rest an Dragees transportiert wird. Um eine Beschädigung dieser verhältnismäßig schnell in den Behälter 2o eintretenden Dragees zu vermeiden, ist die Einlauffläche 44 vorgesehen, durch die die Dragees spitzwinklig aufgefangen und nach unten abgeleitet werden.

Nachdem der Dragierkessel 1o vollständig entleert ist, befinden sich die Dragees in einer Schichtdicke von ca. 7o - 8o cm oberhalb des Siebbodens 26 in der oberen Kammer 28. Im praktischen Betrieb wird der gesamte Behälter zur Weiterbehandlung von dem Dragierkessel 1o weggefahren, so daß dieser wieder neu verwendet werden kann. Danach wird der Ansaugdeckel 24 abgenommen, der Schieber 6o geöffnet und das Gebläse 52 in Betrieb gesetzt, so daß die untere Kammer 3o mit einem Überdruck beaufschlagt wird, der ausreicht, daß die Luft die über dem Siebboden 26 befindlichen Dragees gleichmäßig durchströmt. Im praktischen Betrieb hat sich herausgestellt, daß eine ausreichende und vom Energieverbrauch her wirtschaftliche Nachtrocknung der Dragees bei Verwendung nicht erwärmter Raumluft erreicht wird. Bei dem erwähnten Ausführungsbeispiel war eine Zuluftmenge von 13o $m^3$/h ausreichend, um die Dragees bei einer Zulufttemperatur von 22°C innerhalb von 3 Stunden nachzutrocknen. Die Dragees können danach ohne zu kleben oder ihre Farbe zu verändern in dem gleichen Behälter zwischengelagert werden, bis sie der weiteren Verarbeitung in der Sortier- oder Abfüllmaschine zugeführt werden.

Die Schichtdicke der Dragees in der oberen Kammer 28 ist selbstverständlich bestimmt durch deren Querschnitt und die zu verarbeitende Menge an Dragees. Der angegebene Wert von 7o - 8o cm, maximal 1 m, hat sich praktisch bewährt. Eine optimale Dimensionierung des Behälters bezüglich der Schichtdicke läßt sich gegebenenfalls empirisch bestimmen.

Nach der Zwischenlagerung werden die Dragees üblicherweise der Abfüllstation zugeführt, der eine Sortier-

- 12 -

und gegebenenfalls Bedruckungsmaschine vorgeschaltet ist. Die Entnahme der Dragees aus der oberen Kammer 28 erfolgt durch die Entnahmeöffnung 62, wobei der Schieber 64 geöffnet wird. Je nach den baulichen Gegebenheiten des pharmazeutischen Herstellungsbetriebes, in dem der erfindungsgemäße Behälter 2o verwendet wird, kann die Entnahme der Dragees aus dem Behälter 2o in verschiedenerlei Weise erfolgen. Wenn beispielsweise die Weiterverarbeitung der Dragees in einem tiefer gelegenen Raum erfolgt, kann man die Dragees einfach durch einen mit der Entnahmeöffnung 62 verbundenen Schlauch rutschen lassen.

In der dargestellten Ausführungsform ist ein Entleerungsrohr 68 für eine pneumatische Förderung vorgesehen. Man erkennt deutlich die Nebenluftöffnung 72, durch die Luft während des Entleerungsvorganges in einem ständigen Strom mit relativ hoher Geschwindigkeit durch das Entleerungsrohr 68 gesaugt wird. Die aus der Entnahmeöffnung 62 in den Eingangsbereich 7o des Entleerungsrohrs 68 fallenden Dragees werden von diesem Strom mitgerissen und, praktisch mit der Strömungsgeschwindigkeit der Luft, zur Sortieranlage gefördert und dort in einem Zyklon abgeschieden.

Patentansprüche

1. Vorrichtung zum Entleeren von Dragierkesseln und zum Nachtrocknen und Zwischenlagern von Dragees, gekennzeichnet durch einen Behälter (2o) mit einem unterdruckfesten luftdicht verschließbaren Gehäuse (21,24), in dem sich ein trichterförmiges Sieb (26) dergestalt erstreckt, daß es den Behälter in eine obere Kammer (28) und in eine untere Kammer (3o) teilt, wobei die obere Kammer (28) ein Fassungsvermögen hat, das größer ist als der maximale Inhalt eines Dragierkessels, einen unterdruckfesten Ansaugrüssel (22),dessen Anschlußstutzen (38) im Bereich der oberen Kammer (28) liegt, einen Anschluß (4o) für eine Unterdruckquelle, durch die der nur durch den Ansaugrüssel (22) mit dem Außenraum verbundene Behälter (2o) mit Unterdruck beaufschlagt werden kann, um Dragees aus dem Dragierkessel (1o) durch den Rüssel (22) in die obere Kammer anzusaugen, ein Gebläse (52), durch das zur Trocknung der Dragees Luft mit einem Überdruck in die im übrigen abgedichtete untere Kammer (3o) einblasbar ist, der ausreicht, um die in der oberen Kammer (28) befindlicher Dragees zu durchdringen und aus der geöffneten oberer Kammer (28) auszutreten, wobei der Gebläsekanal luftdicht verschließbar ist, und eine luftdicht verschließbare Entnahmeöffnung (62) fü die Dragees, die mit dem Trichterzentrum des trichter förmigen Siebes (26) in Verbindung steht.

2. Vorrichtung nach Anspruch 1, dadurch gekennzeichnet, daß der Ansaugrüssel (22) und dessen Anschlußstutzen (38) so dimensioniert und angeordnet sind, daß die Förderhöhe der Dragees beim Ansaugen nur wenig größer ist als die minimal notwendige Förderhöhe, die der Differenz zwischen Dragierkesselboden und Unterkante der Dragierkesselöffnung (14) entspricht.

3. Vorrichtung nach einem der Ansprüche 1 oder 2, dadurch gekennzeichnet, daß der Anschlußstutzen (38) für den Ansaugrüssel (22) in einer solchen Höhe angebracht ist, daß er sich beim Entleeren des Dragierkessels etwa in der Höhe der Unterkante der Dragierkesselöffnung (14) befindet, wobei der Stutzen (38) horizontal angebracht ist und seine Innenfläche auf der Innenseite des Behälters (2o) glatt in eine Einlauffläche (44) zur Umlenkung der Dragees nach unten übergeht.

4. Vorrichtung nach einem der Ansprüche 1 bis 3, dadurch gekennzeichnet, daß sich der Anschlußstutzen (38) des Ansaugrüssels (22) an einem von dem übrigen Behälter (2o) abnehmbaren Ansaugdeckel (24) befindet.

5. Vorrichtung nach einem der Ansprüche 1 bis 4, dadurch gekennzeichnet, daß der Behälter (2o) fahrbar ist.

6. Vorrichtung nach einem der Ansprüche 1 bis 5, dadurch gekennzeichnet, daß der Ansaugrüssel (22) einen Durchmesser von 4 cm bis 1o cm, bevorzugt etwa 7 cm hat.

7. Vorrichtung nach einem der Ansprüche 1 bis 6, dadurch gekennzeichnet, daß die obere Kammer (28) so dimensioniert ist, daß die Schichthöhe der Dragees darin maximal 1 m, bevorzugt etwa 7o - 8o cm beträgt.

1/1

Fig. 1

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| Y | DE - U - 7 013 896 (J. CARL) | | 1,5, | A 61 J 3/06 |
| A | * Ansprüche 1 bis 3, 7; Seite 2; Seite 5, Zeilen 7 bis 12; Fig. * | | 3 | B 65 G 53/64 |
| | --- | | | |
| Y | DE - C - 155 518 (H. GELDERMANN) | | 1 | |
| | * Ansprüche 1, 2; Fig. * | | | |
| | --- | | | |
| Y | DE - C - 576 495 (MASCHINENFABRIK AUGS- BURG-NÜRNBERG AG) | | 1,5 | |
| | * Anspruch 1; Seite 2, Zeilen 28 bis 30; Fig. * | | | **RECHERCHIERTE SACHGEBIETE** (Int. Cl.³) |
| | --- | | | |
| Y | FR - A - 1 281 704 (ABBOTT LABORATORIES) | | 1 | A 61 J 3/00 |
| | * Seite 1, rechte Spalte, Zeilen 13 bis 17; Seite 2, linke Spalte, Zeilen 47 bis 50; Fig. 1 * | | | A 61 J 3/06 B 65 G 53/60 B 65 G 53/64 |
| | --- | | | |
| A | DE - A - 2 209 572 (POULTRY VAC, INC.) | | 1 | |
| | * Anspruch 1; Seite 5, Absatz 3 * | | | |
| | --- | | | |
| A | DE - B - 1 506 878 (ENGELBRECHT & LEMMER- BROCK) | | 1 | |
| | * Ansprüche 1, 2; Fig. 1 * | | | **KATEGORIE DER GENANNTEN DOKUMENTE** |
| | ---- | | | X: von besonderer Bedeutung allein betrachtet Y: von besonderer Bedeutung in Verbindung mit einer anderen Veröffentlichung derselben Kategorie A: technologischer Hintergrund O: nichtschriftliche Offenbarung P: Zwischenliteratur T: der Erfindung zugrunde lie- gende Theorien oder Grund- sätze E: älteres Patentdokument, das jedoch erst am oder nach dem Anmeldedatum veröffentlicht worden ist D: in der Anmeldung angeführtes Dokument L: aus andern Gründen ange- führtes Dokument |
| X | Der vorliegende Recherchenbericht wurde für alle Patentansprüche erstellt. | | | &: Mitglied der gleichen Patent- familie, übereinstimmendes Dokument |
| Recherchenort | Berlin | Abschlußdatum der Recherche 01-10-1982 | Prüfer | CLOT |

EPA form 1503.1   06.78